# EUROPEAN PATENT APPLICATION

(11) **EP 4 848 049 A1**
(43) Date of publication of application: **02.12.2026**
(21) Application number: 25774772.5
(22) Date of filing: 18.03.2025
(51) Int. Cl.: G06F 3/048, G06F 9/455, G06F 9/54

(54) **COMPUTING DEVICE AND OPERATION METHOD THEREOF**

(30) Priority: 18.03.2024 KR 20240037390
(71) Applicant: Samsung Electronics Co., Ltd., Suwon-si, Gyeonggi-do 16677 (KR)
(72) Inventor: HAN, Gunwoo, Suwon-si, Gyeonggi-do 16677 (KR); CHOI, Jungeun, Suwon-si, Gyeonggi-do 16677 (KR); KIM, Jihoon, Suwon-si, Gyeonggi-do 16677 (KR); HAN, Inhong, Suwon-si, Gyeonggi-do 16677 (KR)
(74) Representative: Appleyard Lees IP LLP
(86) International application number: PCT/KR2025/003492
(87) International publication number: WO 2025/198300

(57) **Abstract**

A computing device and an operating method are disclosed. A computing device based on detecting, via the guest application, that a key input is to be provided, transmits, via the guest operating system, a first virtual keyboard execution request to a host operating system; executes, via the host operating system, a first host virtual keyboard application; and based on the first host virtual keyboard application being executed, displays, via the first host virtual keyboard application, a host virtual keyboard user interface, for a virtual keyboard of the host operating system, on at least a first portion of a display on which an execution screen of the guest application is displayed.

## Description

### TECHNICAL FIELD

The present disclosure relates to a computing device and a method of operating the same, and more particularly, to a computing device capable of providing a virtual keyboard in a computing device including a host system and a guest system, and a method of operating the computing device.

### BACKGROUND ART

Electronic devices equipped with heterogeneous operating systems (OSes) have been developed and released. Most electronic devices run on a single OS, but some electronic devices are released with a plurality of OSes to achieve technical or business advantages. For example, the manufacturer of Samsung Smart TV/Monitor has developed an Android-on-Tizen (AoT) platform that is based on Tizen OS but equipped with both Tizen OS and Android OS for executing Android applications.

An operation of a virtual keyboard on heterogeneous OSes depends on the OS that an application requesting the virtual keyboard is based on. When the application is a Tizen application, a virtual keyboard in Tizen OS may be executed, and when the application is an Android application, a virtual keyboard in Android OS may be executed.

Because development of a plurality of virtual keyboards is to be provided to support heterogeneous OSes, there are issues in terms of cost and development period. In addition, it is difficult for virtual keyboards that run on the respective OSes to provide the same user experience in terms of user interface (UI)/user experience (UX).

### DISCLOSURE OF INVENTION

### SOLUTION TO PROBLEM

An embodiment of the disclosure provides a computing device for enabling a virtual keyboard that runs on a host operating system (OS) to run in a guest OS as well in a computing device including a host system and a guest system, and a method of operating the computing device.

According to an aspect of the disclosure, a computing device includes one or more processors; and memory storing instructions.

According to an aspect of the disclosure, the instructions, when executed by the one or more processors, may cause the computing device to, based on detecting, via the guest application, that a key input is to be provided, transmit, via the guest operating system, a first virtual keyboard execution request to a host operating system.

According to an aspect of the disclosure, the instructions, when executed by the one or more processors, may cause the computing device to execute, via the host operating system, a first host virtual keyboard application.

According to an aspect of the disclosure, the instructions, when executed by the one or more processors, may cause the computing device to, based on the first host virtual keyboard application being executed, display, via the first host virtual keyboard application, a host virtual keyboard user interface, for a virtual keyboard of the host operating system, on at least a first portion of a display on which an execution screen of the guest application is displayed.

According to an aspect of the disclosure, a method of operating a computing device includes based on detecting, via the guest application, that a key input is to be provided, transmitting, via the guest operating system, a first virtual keyboard execution request to a host operating system.

According to an aspect of the disclosure, a method of operating a computing device includes executing, via the host operating system, a first host virtual keyboard application.

According to an aspect of the disclosure, a method of operating a computing device includes based on the first host virtual keyboard application being executed, displaying, via the first host virtual keyboard application, a host virtual keyboard user interface, for a virtual keyboard of the host operating system, on at least a first portion of a display on which an execution screen of the guest application is displayed.

According to an aspect of the disclosure, a non-transitory computer-readable recording medium having instructions recorded thereon, that, when executed by one or more processors, cause the one or more processors to execute a guest application of a guest operating system (OS); based on detecting, via the guest application, that a key input is to be provided, transmit, via the guest operating system, a first virtual keyboard execution request to a host operating system; execute, via the host operating system, a first host virtual keyboard application; and based on the first host virtual keyboard application being executed, display, via the first host virtual keyboard application, a host virtual keyboard user interface, for a virtual keyboard of the host operating system, on at least a first portion of a display on which an execution screen of the guest application is displayed.

According to the disclosed computing device and method, it is possible to reduce the effort and cost of developing a virtual keyboard for each OS in a computing device that supports heterogeneous OSes.

In addition, according to the disclosed computing device and method, a unified user interface (UI)/user experience (UX) may be provided by using a single virtual keyboard in a computing device that supports heterogeneous OSes

### BRIEF DESCRIPTION OF DRAWINGS

The foregoing and other aspects, features, and advantages of an embodiment will become more apparent from the following detailed description in conjunction with the accompanying drawings.
FIG. 1 illustrates an example of a computing device including a host system and a guest system, according to an embodiment.
FIG. 2 illustrates an example in which a virtual keyboard is displayed according to execution of each application, according to an example.
FIG. 3 illustrates an example of a computing device including a host system and a guest system, according to an embodiment.
FIG. 4 illustrates an example of a flowchart of a method of operating a computing device, according to an embodiment.
FIG. 5 is a reference diagram for describing operations of a guest system and a host system included in a computing device, according to an embodiment.
FIG. 6 illustrates a flowchart of an example of a method of operating a virtual keyboard during execution of a guest application on a computing device, according to an embodiment.
FIG. 7 illustrates an example of a guest application execution screen according to an example.
FIG. 8 illustrates an example in which a host virtual keyboard is displayed on a portion of a guest application screen, according to an example.
FIG. 9 illustrates a flowchart of an example of a method of terminating a virtual keyboard during execution of a guest application on a computing device, according to an embodiment.
FIG. 10 illustrates a flowchart of an example of a method of operating a virtual keyboard during execution of a guest application on a computing device, according to an embodiment.
FIG. 11 illustrates a flowchart of an example of a method of operating a virtual keyboard during execution of a guest application on a computing device, according to an embodiment.
FIG. 12 illustrates an example of a computing device according to an embodiment.

### MODE FOR THE INVENTION

The terms used herein will be briefly described, and then the disclosure will be described in detail with reference to the accompanying drawings.

Although the terms used herein are selected from among common terms that are currently widely used in consideration of their functions in the disclosure, the terms may be different according to an intention of one of ordinary skill in the art, a precedent, or the advent of new technology. Also, in some cases, the terms may be discretionally selected by the applicant, in which case, the meaning of those terms will be described in the corresponding part of the description. Therefore, the terms used herein are not merely designations of the terms, but the terms are defined based on the meaning of the terms and content throughout the disclosure.

Throughout the disclosure, when a part "includes" a component, it means that the part may additionally include other components rather than excluding other components as long as there is no particular opposing recitation. In addition, as used herein, the terms such as "...er (or)", "... unit", "... module", etc., denote a unit that performs at least one function or operation, which may be implemented as hardware or software or a combination thereof.

The expressions "at least one of A, B and C" and "at least one of A, B, or C", both indicate only "A", only "B", only "C", both "A and B", both "A and C", both "B and C", and all of "A, B, and C".

Hereinafter, embodiments will be described with reference to the accompanying drawings in such a manner that the embodiments may be carried out by one of skill in the art. The disclosure may, however, be embodied in many different forms and should not be construed as being limited to an embodiment set forth herein. In order to clearly describe the disclosure, similar reference numerals are assigned to similar elements throughout the disclosure.

In an embodiment, the term "user" refers to a person who controls functions or operations of a computing device or an electronic device by using a control device, and may include a viewer, a manager, or an installer.

Computers include general-purpose central processing units (CPUs) or processors designed to execute a set of system instructions. A processor executes instructions, and a set of instructions executable by the processor is referred to as an instruction set of the processor. The uniqueness of processors between computer systems may lead to incompatibility of the computer systems with hardware architectures. In general, computer manufacturers want to enable more applications to run on their processor families. Therefore, in order to increase the number of operating systems and application programs that executable on a computer system, a host computer with one type of CPU, which is referred to as a host, may employ virtual machine technology that enables emulation of instructions for another type of CPU, which is referred to as a guest.

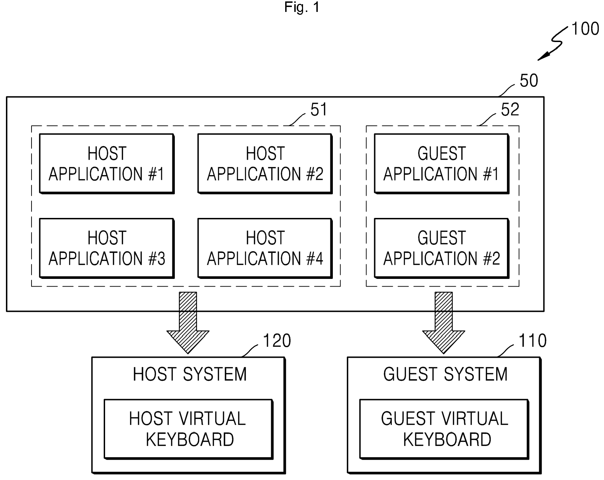

FIG. 1 illustrates an example of a computing device including a host system and a guest system, according to an embodiment.

Referring to FIG. 1, a computing device 100 may include a host system 120 and a guest system 110. The computing device 100 may display, on a home screen 50 thereof, one or more host applications 51 and one or more guest applications 52. For example, in FIG. 1, the host applications 51 displayed on the home screen 50 may include host applications #1 to #4, and the guest applications 52 may include guest applications #1 and #2. For example, in a Tizen system from Samsung Electronics, a Tizen home screen may include not only Tizen applications as host applications but also Android applications as guest applications. When there is an execution request for the host application 51, the computing device 100 may execute the host application 51 based on the host system 120. When there is an execution request for the guest application 52, the computing device 100 may execute the guest application 52 based on the guest system 110.

When a key input is to be provided in each application, the application may provide a virtual keyboard. For example, when a key input is to be provided during execution of a host application, the host system 120 may provide a host virtual keyboard. For example, when a key input is to be provided while a guest application is running, the guest system 110 may provide a guest virtual keyboard. Thus, a user of the computing device 100 may experience virtual keyboards with different formats for respective application even when using one computing device 100. In addition, when there are a plurality of guest systems, different virtual keyboards may be provided for the respective guest applications.

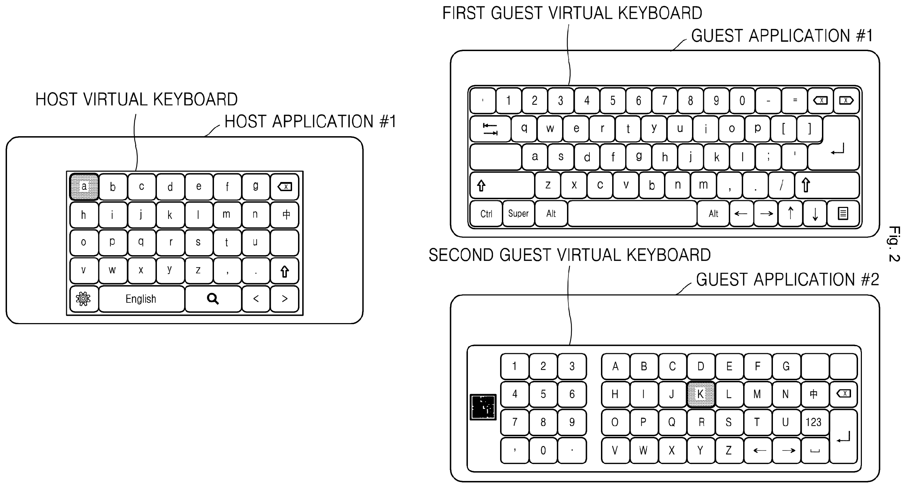

FIG. 2 illustrates an example in which a virtual keyboard is displayed according to execution of each application.

Referring to FIG. 2, when a key input is to be provided during execution of host application #1, a host virtual keyboard may be displayed. In addition, when a key input is to be provided during execution of guest application #1, a first guest virtual keyboard may be displayed. In addition, in a case in which guest application #2 is based on a different guest system from guest application #1, a second guest virtual keyboard may be displayed when a key input is to be provided during execution of guest application #2. Thus, it may be inconvenient for the user to encounter a plurality of virtual keyboards with different formats on a single computing device. To address this, a method is to be provided of providing a host virtual keyboard even when executing a guest application.

To this end, the disclosure is to provide a guest system and a host system with intermediary applications for communication between the guest system and the host system, and enable transmission of a virtual keyboard execution request from the guest system to the host system by using the intermediary application provided in the guest system and the intermediary application provided in the host system. An intermediary application provided in a guest system may be referred to as a guest virtual keyboard application. An intermediary application provided in a host system may be referred to as a host application. As such, when a key input is to be provided in a running guest application, a virtual keyboard based on the host system may be executed by providing a virtual keyboard execution request from the guest system to the host system. Accordingly, the computing device 100 may cause a virtual keyboard based on the host system to be displayed on at least a portion of a display screen on which a guest application execution screen is displayed. A key input received through the virtual keyboard based on the host system may be transmitted from the host system to the guest system again by using the intermediary applications, and the guest application may perform an operation or a function corresponding to a key value corresponding to the key input.

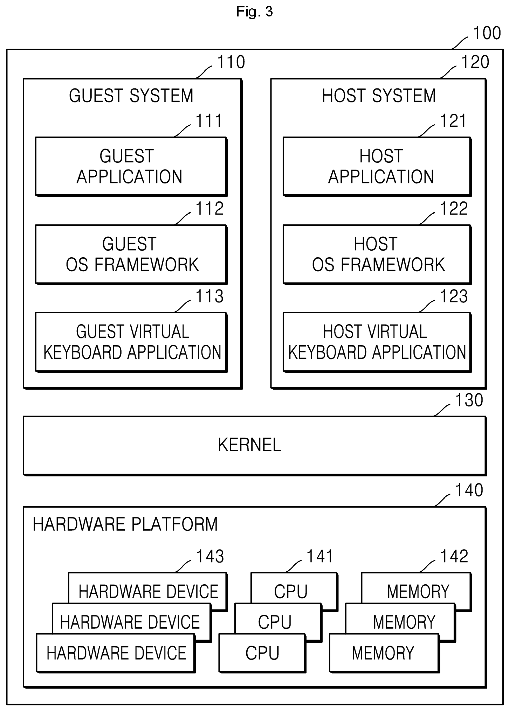

FIG. 3 illustrates an example of a computing device including a host system and a guest system, according to an embodiment.

Referring to FIG. 3, the computing device 100 may include the guest system 110, the host system 120, a kernel 130, and a hardware platform 140.

The computing device 100 may refer to a computer that supports execution of an operating system and one or more application programs. The computing device 100 may be a general-purpose computer or a display device. The display device may include various types of electronic devices capable of receiving and outputting content, such as a network television (TV), a smart TV, an Internet TV, a web TV, an internet protocol TV (IPTV), or a PC.

The guest system 110 is a software implementation of a physical computing device, and implements a computing platform that supports execution of software applications under control of a guest operating system. The guest system may include, for example, well-known commercial operating systems, such as Android^{®} from Google, Windows^{®} from Microsoft, Linux^{®} operating system, MacOS^{®} from Apple, and the like.

The guest system 110 may include a guest application 111, a guest operating system (OS) framework 112, and a guest virtual keyboard application 113.

The guest application 111 may refer to an application that may be executed based on a guest operating system.

According to an embodiment, the guest application 111 may transmit, to the guest OS framework 112, information, such as an event, indicating that a key input is to be provided. The guest application 111 may, based on recognizing or detecting a state in which a key input is to be provided while running, transmit, to the guest OS framework 112, information, such as an event, indicating that a key input is to be provided. For example, when a cursor is positioned in a search box on a user interface displayed on a screen according to execution of a guest application, this may be recognized as a state in which a key input is to be provided, and accordingly, the guest application 111 may transmit, to the guest OS framework 112, information, such as an event, indicating that a key input is to be provided.

According to an embodiment, the guest application 111 may receive, from the guest OS framework 112, a key value corresponding to a key input, and perform a function or an operation corresponding to the received key value. For example, when the received key value corresponds to a letter, a number, or a special character on a keyboard, the guest application 111 may perform an operation of outputting a character corresponding to the key value in a text display area. For example, when the received key value corresponds to a function key on a keyboard, the guest application 111 may perform a function corresponding to the function key. For example, the function key may include a Tab key, which is used to advance a cursor by a preset length, a Ctrl key, which is used to perform a function when pressed in combination with another key, and an Enter key, which is used to perform a function of executing an entered command.

The guest OS Framework 112 may consist of several different components that implement a standard structure for application programs for the guest operating system, such as support programs, compilers, code libraries, application programming interfaces (APIs), or classes.

According to an embodiment, the guest OS framework 112 may receive, from the guest application 111, information, such as an event, indicating that a key input is to be provided, and transmit an execution request to the guest virtual keyboard application 113.

According to an embodiment, the guest OS framework 112 may receive, from the guest virtual keyboard application 113, a key value corresponding to a key input entered by a user, and transmit the received key value to the guest application 111.

The guest virtual keyboard application 113 may refer to an application that is executed based on the guest operating system and provides a virtual keyboard upon a request of the guest OS framework. The guest virtual keyboard application 113 does not perform an operation of actually display a virtual keyboard on a display screen, but may act as an intermediary to execute a host virtual keyboard application 123.

According to an embodiment, in response to the execution request from the guest OS framework 112, the guest virtual keyboard application 113 may transmit a virtual keyboard execution request to a host application 121 of the host system 120.

According to an embodiment, the guest virtual keyboard application 113 may receive a key value corresponding to a key input from the host application 121 of the host system, and transmit the received key value to the guest OS framework 112.

The host system 120 provides an operating system platform for executing processes on the computing device 100. The host system 120 controls all hardware devices in the computing device 100 and manages system resources for all applications executed therein.

The host system 120 may include the host application 121, a host OS framework 122, and the host virtual keyboard application 123.

The host application 121 may refer to an application that may be executed based on a host operating system. The host application 121 may refer to an application for receiving a virtual keyboard execution request from a guest system and relays it to a host system.

According to an embodiment, the host application 121 may receive a virtual keyboard execution request from the guest virtual keyboard application 113, and transmit, to the host OS framework 122, information, such as an event, indicating that a key input is to be provided.

According to an embodiment, the host application 121 may receive a key value corresponding to a key input from the host OS framework 122 and transmit the received key value to the guest virtual keyboard application 113.

The host OS framework 122 may consist of several different components that implement a standard structure for application programs for the host operating system, such as support programs, compilers, code libraries, APIs, or classes.

According to an embodiment, the host OS framework 122 may receive, from the host application 121, information, such as an event, indicating that a key input is to be provided, and transmit an execution request to the host virtual keyboard application 123.

According to an embodiment, the host OS framework 122 may receive, from the host virtual keyboard application 123, a key value corresponding to a key input entered by the user, and transmit the received key value to the host application 121.

The host virtual keyboard application 123 may refer to an application that is executed based on the host operating system and provides a virtual keyboard upon a request of the host OS framework. A virtual keyboard may refer to a software keyboard for displaying a keyboard on a display screen to enable input by selecting a key, unlike a physical hardware keyboard.

According to an embodiment, the host virtual keyboard application 123 may perform a virtual keyboard operation in response to an execution request from the host OS framework 122.

According to an embodiment, the host virtual keyboard application 123 may output, on a display screen, a graphical user interface including a virtual keyboard.

According to an embodiment, when the host virtual keyboard application 123 receives a key input from the user based on a graphical user interface including a virtual keyboard, the host virtual keyboard application 123 may transmit, to the host OS framework 122, a key value corresponding to the received key input.

In the computing device as described above, the guest virtual keyboard application 113 and the host application 121 may be provided to act as intermediaries between the guest OS framework 112 and the host OS framework 122 such that the host virtual keyboard application may be executed in response to information, such as an event, indicating that a key input is to be provided from the guest application 111. By the guest virtual keyboard application 113 and the host application 121, it is possible to enable the host virtual keyboard to operate on a guest application.

The kernel 130 serves to connect between the guest system 110, the host system 120, and the physical hardware platform 140 of the computing device 100. The kernel 130 is a central operating system component that runs directly on the host. The kernel 130 allocates memory, schedules an access to a physical CPU, and schedules an access to physical hardware devices connected to the computing device 100.

The hardware platform 140 may include one or more physical CPUs 141, one or more memories 142, and one or more physical hardware devices 143. The memory may include a random-access memory storing programs currently being executed, and data used for the programs. The hardware platform may also include channels, adapters, and the like.

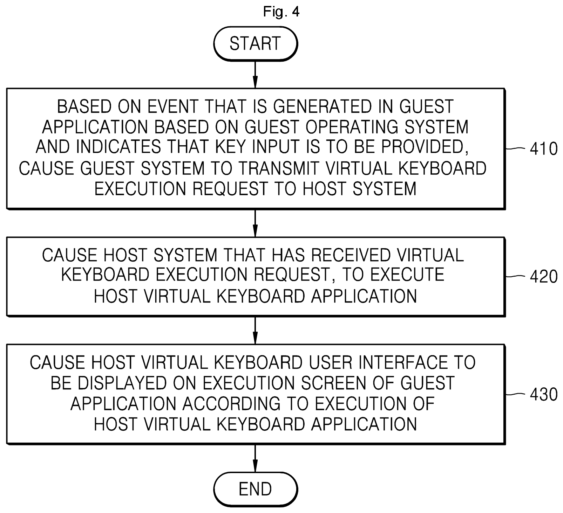

FIG. 4 illustrates an example of a flowchart of a method of operating a computing device, according to an embodiment.

Referring to FIG. 4, in operation 410, based on an event that is generated in a guest application based on a guest operating system and indicates that a key input is to be provided, the computing device 100 may cause a guest system to transmit a virtual keyboard execution request to a host system.

According to an embodiment, information, such as an event, indicating that a key input is to be provided may be generated during execution of the guest application that is based on the guest operating system. For example, during execution of the guest application, the guest application may detect a situation in which a key input is to be provided, and generate information, such as an event, indicating that a key input is to be provided. Guest applications that may generate an event in which a key input is to be provided may include, for example, search applications, email applications, messaging applications, and the like. For example, when a search application detects that the cursor is positioned in a text input window for inputting a keyword, the search application may generate information, such as an event, indicating that a key input is to be provided.

According to an embodiment, when such information, such as an event, indicating that a key input is to be provided is generated in the guest application, the guest system may transmit a virtual keyboard execution request to the host system. For transmission of the virtual keyboard execution request from the guest system to the host system, a guest virtual keyboard application of the guest system and a host application of the host system may be provided. The guest virtual keyboard application of the guest system does not actually perform a virtual keyboard function, but may serve to transmit a virtual keyboard execution request to a host system and receive a key values corresponding to a key input from the host system. The host application of the host system is for the host system to receive a virtual keyboard execution request, and may serve to receive a virtual keyboard execution request from a guest system, and transmit, to the guest system, a key value corresponding to a key input received according to execution of a virtual keyboard.

According to an embodiment, the guest system may transmit, to the host system, information about the language of a character displayed on each key of the virtual keyboard. This allows a virtual keyboard user interface to be displayed based on the transmitted information about the language of the character.

According to an embodiment, the guest system may transmit, to the host system, information about an area of a screen in which a virtual keyboard is to be displayed. Accordingly, a virtual keyboard user interface may be displayed in an area of a screen indicated by the guest.

In operation 420, the computing device 100 may cause the host system that has received the virtual keyboard execution request, to execute a host virtual keyboard application.

According to an embodiment, the host system that receives the virtual keyboard execution request from the guest system may cause the host virtual keyboard application to be executed. The host virtual keyboard application may serve to perform a virtual keyboard operation to display a virtual keyboard user interface on the screen and receive a key input through the virtual keyboard user interface.

In operation 430, the computing device 100 may cause a virtual keyboard user interface to be displayed on an execution screen of the guest application according to execution of the host virtual keyboard application.

According to an embodiment, the host system may receive information about the language of a character from the guest system, and cause a virtual keyboard user interface to be displayed based on the information about the language of the character.

According to an embodiment, the host system may receive, from the guest system, information about an area of a screen in which a virtual keyboard is to be displayed, and cause the virtual keyboard user interface to be displayed in the area of the screen indicated by the guest.

According to an embodiment, when the host system receives a key input through the displayed virtual keyboard user interface, the host system may transmit, to the guest system, a key value corresponding to the key input, so as to cause the guest application of the guest system to perform an operation or a function corresponding to the key value.

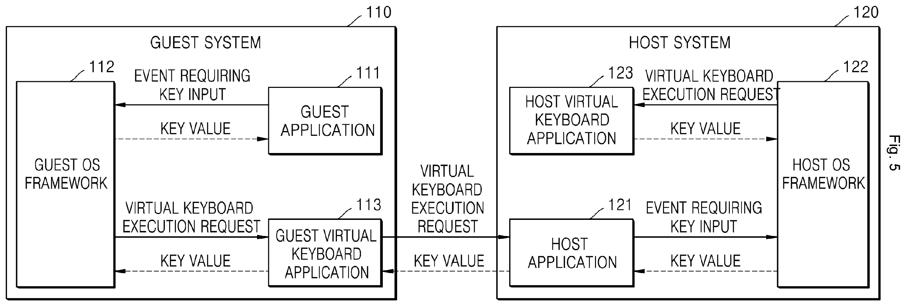

FIG. 5 is a reference diagram for describing operations of a guest system and a host system included in a computing device, according to an embodiment.

Referring to FIG. 5, the guest system 110 may include the guest application 111, the guest OS framework 112, and the guest virtual keyboard application 113.

The guest system 110 is a software implementation of a physical computing device, and implements a computing platform that supports execution of software applications under control of a guest operating system. In a case in which the host system is a Tizen system from Samsung Electronics, the guest system may include, for example, well-known commercial operating systems such as Android^{®} from Google, Windows^{®} from Microsoft, Linux^{®} operating system, MacOS^{®} from Apple, and the like.

The guest application 111 may refer to an application that may be executed based on a guest operating system. For example, in a case in which the host system is Tizen OS, the guest application may be an application that runs on Android OS. For example, the guest application may be downloaded from an application store or an Android OS-based server and then installed in a computing device.

According to an embodiment, the guest application 111 may transmit, to the guest OS framework 112, information, such as an event, indicating that a key input is to be provided. The guest application 111 may, based on recognizing or detecting a state in which a key input is to be provided while running, transmit, to the guest OS framework 112, information, such as an event, indicating that a key input is to be provided. For example, when a cursor is positioned in a search box that is a portion of a user interface displayed on a screen according to execution of a guest application, this may be recognized as a state in which a key input is to be provided, and accordingly, the guest application 111 may transmit, to the guest OS framework 112, information, such as an event, indicating that a key input is to be provided. The guest application 111 may be any application capable of receiving a key input. For example, the guest application 111 may include a search application, an email application, a messaging application, and the like.

According to an embodiment, the guest application 111 may receive, from the guest OS framework 112, a key value corresponding to a key input, and perform a function or an operation corresponding to the received key value. For example, when the received key value corresponds to a letter, a number, or a special character on a keyboard, the guest application 111 may perform an operation of outputting a character corresponding to the key value in a text display area. For example, when the received key value corresponds to a function key on a keyboard, the guest application 111 may perform a function corresponding to the function key. For example, the function key may include a Tab key, which is used to advance a cursor by a preset length, a Ctrl key, which is used to perform a function when pressed in combination with another key, and an Enter key, which is used to perform a function of executing an entered command.

According to an embodiment, the guest application 111 may transmit, to the guest OS framework 112, information, such as an event, indicating that key input is to be suspended. The guest application 111 may, based on recognizing or detecting a state in which key input is to be suspended while running, transmit, to the guest OS framework 112, information, such as an event, indicating that key input is to be suspended. For example, when a virtual keyboard is displayed on a screen and a virtual keyboard operation is performed, and then a situation is detected where the display of the virtual keyboard is to be removed due to a user input, this may be recognized as a state in which key input is to be suspended, and accordingly, the guest application 111 may transmit, to the guest OS framework 112, information, such as an event, indicating that key input is to be suspended. For example, when a user input is received from the user to select a content item while a virtual keyboard is displayed, the computing device 100 is to output content corresponding to the selected content item in full screen, thus, the virtual keyboard is to disappear, and accordingly, the guest application 111 may generate information, such as an event, indicating that key input is to be suspended.

The guest OS Framework 112 may consist of several different components that implement a standard structure for application programs for the guest operating system, such as support programs, compilers, code libraries, APIs, or classes.

According to an embodiment, the guest OS framework 112 may receive, from the guest application 111, information, such as an event, indicating that a key input is to be provided, and transmit an execution request to the guest virtual keyboard application 113.

According to an embodiment, the guest OS framework 112 may receive, from the guest virtual keyboard application 113, a key value corresponding to a key input entered by a user, and transmit the received key value to the guest application 111.

According to an embodiment, the guest OS framework 112 may control a virtual keyboard to be arranged in an area of the display screen. The guest OS framework 112 may provide the guest virtual keyboard application 113 with position information of an area where a virtual keyboard graphical user interface is to be output. The guest OS framework 112 may determine the position information of the area where the virtual keyboard graphical user interface is to be output, or may receive it from the guest application 111.

According to an embodiment, the guest OS framework 112 may control the language of characters displayed on the virtual keyboard to be a language. The guest OS framework 112 may provide the guest virtual keyboard application 113 with information about the language of characters displayed on the virtual keyboard of the virtual keyboard graphical user interface. For example, the guest OS framework 112 may determine the language of the characters displayed on the virtual keyboard with reference to information about the region or country in which the computing device 100 is installed. For example, in a case in which the computing device 100 is installed in China, the guest OS framework 112 may determine the default language of the virtual keyboard as Chinese, and provide the virtual keyboard graphical user interface 113 with information about the determined language.

The guest virtual keyboard application 113 may refer to an application that is executed based on the guest operating system and provides a virtual keyboard upon a request of the guest OS framework. In order to operate according to the disclosed embodiment, the guest virtual keyboard application 113 does not actually have a user interface for a virtual keyboard or perform any operation of outputting a user interface on a display screen, but may act as an intermediary for executing the host virtual keyboard application 123. The guest virtual keyboard application 113 may communicate with the host application 121 of the host system 120 to execute the host virtual keyboard application 123.

According to an embodiment, in response to a virtual keyboard execution request from the guest OS framework 112, the guest virtual keyboard application 113 may transmit a virtual keyboard execution request to the host application 121 of the host system 120.

According to an embodiment, the guest virtual keyboard application 113 may receive a key value corresponding to a key input from the host application 121 of the host system, and transmit the received key value to the guest OS framework 112.

According to an embodiment, when the guest virtual keyboard application 113 receives, from the guest OS framework 112, information about the language of characters displayed on a virtual keyboard, the guest virtual keyboard application 113 may transmit the information about the language to the host application 121 of the host system 120.

According to an embodiment, when the guest virtual keyboard application 113 receives, from the guest OS framework 112, position information of an area where a virtual keyboard is to be displayed, the guest virtual keyboard application 113 may transmit the position information to the host application 121 of the host system 120. The host system 120 provides an operating system platform for executing processes on the computing device 100. The host system 120 controls all hardware devices in the computing device 100 and manages system resources for all applications executed therein.

The host system 120 may include the host application 121, the host OS framework 122, and the host virtual keyboard application 123.

The host application 121 may refer to an application that may be executed based on a host operating system. The host application 121 may refer to an application for receiving a virtual keyboard execution request from a guest system and relays it to a host system. The host application 121 may serve to communicate with the guest virtual keyboard application of the guest system 110 to trigger the host virtual keyboard.

According to an embodiment, the host application 121 may receive a virtual keyboard execution request from the guest virtual keyboard application 113, and transmit, to the host OS framework 122, information, such as an event, indicating that a key input is to be provided, based on the virtual keyboard execution request. The host application 121 may refer to an application created to act as an intermediary for transmitting a virtual keyboard execution request from the guest virtual keyboard application 113 to the host OS framework 122. When a virtual keyboard execution request is received from the guest virtual keyboard application 113, the host application 121 recognizes this as a situation in which a key input is to be provided, and thus transmit, to the host OS framework 122, information, such as an event, indicating that a key input is to be provided. A process of the host application 121 transmitting information, such as an event, indicating that a key input is to be provided, to the host OS framework 122 in response to a trigger operation from the guest virtual keyboard application 113 as described above may correspond to a process of the guest application 111 recognizing a situation in which a key input is to be provided and transmitting, to the guest OS framework 112, information, such as an event, indicating that a key input is to be provided. Although the actual situation in which a key input is to be provided occurs in the guest system 110, in order to wake up the host virtual keyboard application 123, the Android virtual keyboard application 113 provides a trigger signal corresponding to a situation in which a key input is to be provided in the host application 121, thereby triggering an operation of executing the host virtual keyboard application in the host OS framework 122. By applying the mechanism for transmitting information, such as an event, indicating that a key input is to be provided, to the host system 120 as is, a virtual keyboard execution request from the guest system 110 may be efficiently transmitted to the host system 120 without significantly changing a process of the host system 120.

According to an embodiment, the host application 121 may receive a key value corresponding to a key input from the host OS framework 122 and transmit the received key value to the guest virtual keyboard application 113.

According to an embodiment, the host application 121 may receive information about the language of the virtual keyboard from the guest virtual keyboard application 113, and transmit the information about the language to the host OS framework 122.

According to an embodiment, the host application 121 may receive, from the guest virtual keyboard application 113, position information of an area where a virtual keyboard is to be displayed, and transmit the position information to the host OS framework 122.

The host OS framework 122 may consist of several different components that implement a standard structure for application programs for the host operating system, such as support programs, compilers, code libraries, APIs, or classes.

According to an embodiment, the host OS framework 122 may receive, from the host application 121, information, such as an event, indicating that a key input is to be provided, and transmit an execution request to the host virtual keyboard application 123.

According to an embodiment, the host OS framework 122 may receive, from the host virtual keyboard application 123, a key value corresponding to a key input entered by the user, and transmit the received key value to the host application 121.

According to an embodiment, when the host OS framework 122 receives information about the language of characters of a virtual keyboard from the host application 121, the host OS framework 122 may transmit an execution request to the host virtual keyboard application 123 based on the received information about the language. For example, the host system 120 may include host virtual keyboard applications corresponding to one or more languages. When the host OS framework 122 receives information about the language of characters of a virtual keyboard from the host application 121, the host OS framework 122 may select a host virtual keyboard application corresponding to the received language and transmit an execution request to the selected host virtual keyboard application.

According to an embodiment, when the host OS framework 122 receives, from the host application 121, position information of an area where a virtual keyboard is to be displayed, the host virtual keyboard application 123 may control a host virtual keyboard user interface to be displayed at a position according to the received position information.

The host virtual keyboard application 123 may refer to an application that is executed based on the host operating system and provides a virtual keyboard upon a request of the host OS framework. A virtual keyboard may refer to a software keyboard for displaying a keyboard on a display screen to enable input by selecting a key, unlike a physical hardware keyboard.

According to an embodiment, the host virtual keyboard application 123 may perform a virtual keyboard operation in response to an execution request from the host OS framework 122.

According to an embodiment, the host virtual keyboard application 123 may output, on a display screen, a graphical user interface including a virtual keyboard.

According to an embodiment, when the host virtual keyboard application 123 receives a key input from the user based on a graphical user interface including a virtual keyboard, the host virtual keyboard application 123 may transmit, to the host OS framework 122, a key value corresponding to the received key input.

In the computing device as described above, the guest virtual keyboard application 113 and the host application 121 may be provided to act as intermediaries between the guest OS framework 112 and the host OS framework 122 such that the host virtual keyboard application may be executed in response to information, such as an event, indicating that a key input is to be provided from the guest application 111. By the guest virtual keyboard application 113 and the host application 121, it is possible to enable the host virtual keyboard to operate on a guest application.

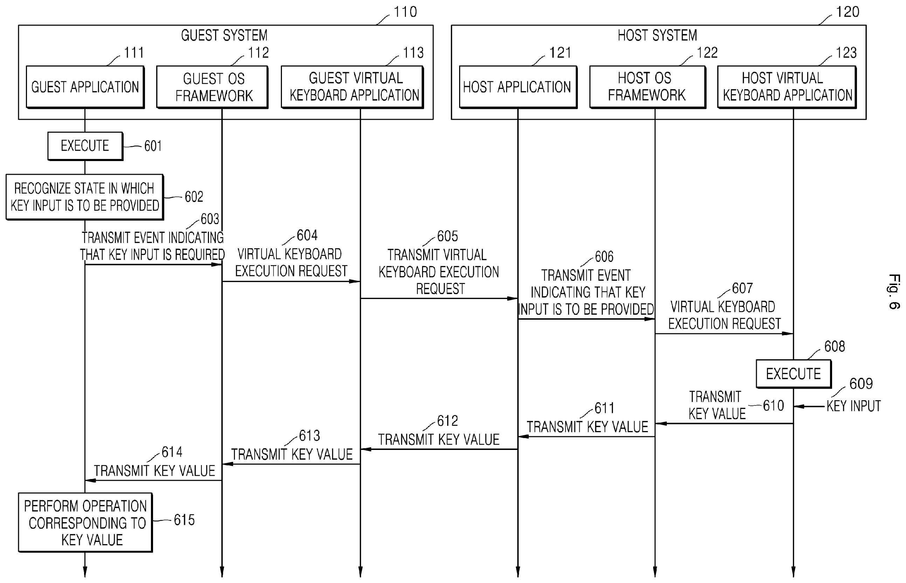

FIG. 6 illustrates a flowchart of an example of a method of operating a virtual keyboard during execution of a guest application on a computing device, according to an embodiment.

Referring to FIG. 6, in operation 601, the guest application 111 may be executed. For example, the guest application 111 may be executed based on a user input for executing the guest application 111. Execution of the guest application 111 may include displaying a screen corresponding to execution of the guest application 111.

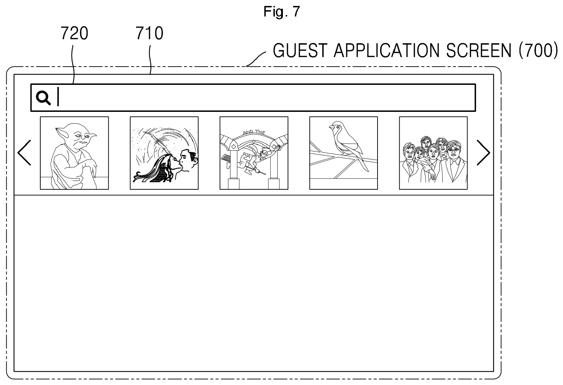

FIG. 7 illustrates an example of a guest application execution screen. For example, as illustrated in FIG. 7, the computing device 100 may display a screen 700 as a result of execution of the guest application 111.

In operation 602, during execution of the guest application 111, the guest application 111 may recognize a state in which a key input is to be provided. For example, as illustrated in FIG. 7, in a case in which the guest application 111 is a search application, when the guest application 111 detects that a cursor 720 is positioned in a search box 710 for inputting a search keyword, the guest application 111 may recognize that a key input is to be provided.

In operation 603, in response to recognizing that a key input is to be provided, the guest application 111 may transmit, to the guest OS framework 112, information, such as an event, indicating that a key input is to be provided.

In operation 604, in response to receiving, from the guest application 111, the event indicating that a key input is to be provided, the guest OS framework 112 may transmit a virtual keyboard execution request to the guest virtual keyboard application 113.

In operation 605, in response to receiving the virtual keyboard execution request from the guest OS framework 112, the guest virtual keyboard application 113 may transmit a virtual keyboard execution request to the host application 121 of the host system 120.

In operation 606, in response to receiving the virtual keyboard execution request from the guest virtual keyboard application 113, the host application 121 may transmit, to the host OS framework 122, information, such as an event, indicating that a key input is to be provided. The host application 121 may recognize the receiving of the virtual keyboard execution request from the guest virtual keyboard application 113, as a state in which a key input is to be provided.

In operation 607, in response to receiving, from the host application 121, the event indicating that a key input is to be provided, the host OS framework 122 may transmit a virtual keyboard execution request to the host virtual keyboard application 123.

In operation 608, in response to receiving the virtual keyboard execution request from the host OS framework 122, the host virtual keyboard application 123 may be executed. Execution of a virtual keyboard application may include displaying a host virtual keyboard user interface on a display screen and receiving a key input through the virtual keyboard user interface.

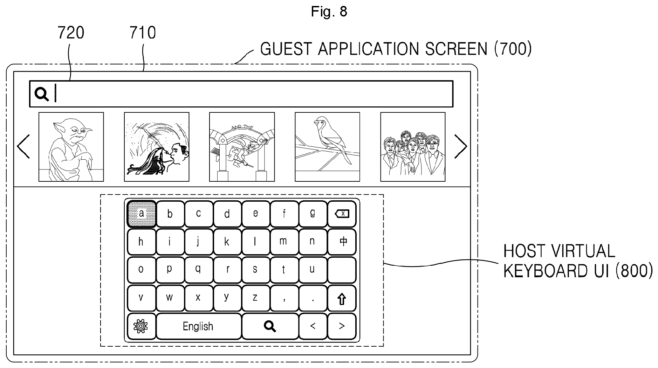

FIG. 8 illustrates an example in which a host virtual keyboard is displayed on a portion of a guest application screen. For example, as illustrated in FIG. 8, the computing device 100 may output a virtual keyboard graphical user interface 800 on at least a portion of the guest application execution screen 700 according to execution of the host virtual keyboard application 123. In this way, the computing device 100 may provide a more consistent and convenient virtual keyboard system by providing the virtual keyboard graphical user interface 800 based on the host system 120 instead of a virtual keyboard based on the guest system 110 even while the guest application 111 is running.

In operation 609, the host virtual keyboard application 123 may receive a key input.

In operation 610, the host virtual keyboard application 123 may transmit, to the host OS framework 122, a key value corresponding to the received key input. The host virtual keyboard application 123 includes a table in which key values are respectively mapped to corresponding key inputs, and may obtain the key value corresponding to the received key input with reference to the table.

In operation 611, the host OS framework 122 may transmit, to the host application 121, the key value received from the host virtual keyboard application 123.

In operation 612, the host application 121 may transmit, to the guest virtual keyboard application 113 of the guest system 110, the key value received from the host OS framework 122.

In operation 613, the guest virtual keyboard application 113 may transmit, to the guest OS framework 112, the key value received from the host application 121.

In operation 614, the guest OS framework 112 may transmit, to the guest application 111, the key value received from the guest virtual keyboard application 113.

In operation 615, the guest application 111 may perform an operation or a function corresponding to the key value received from the guest OS framework. For example, when the received key value corresponds to a character, the guest application 111 may output the character in a text area. For example, in the example of FIG. 8, when the key value corresponds to "a", the guest application 111 may output "a" in the search box 710. For example, when the received key value is a key value corresponding to a function key, the guest application 111 may perform a function associated with the function key. For example, in the example illustrated in FIG. 8, when the received key value corresponds to the Enter key, the guest application 111 may perform a search operation for a string or a word input in the search box.

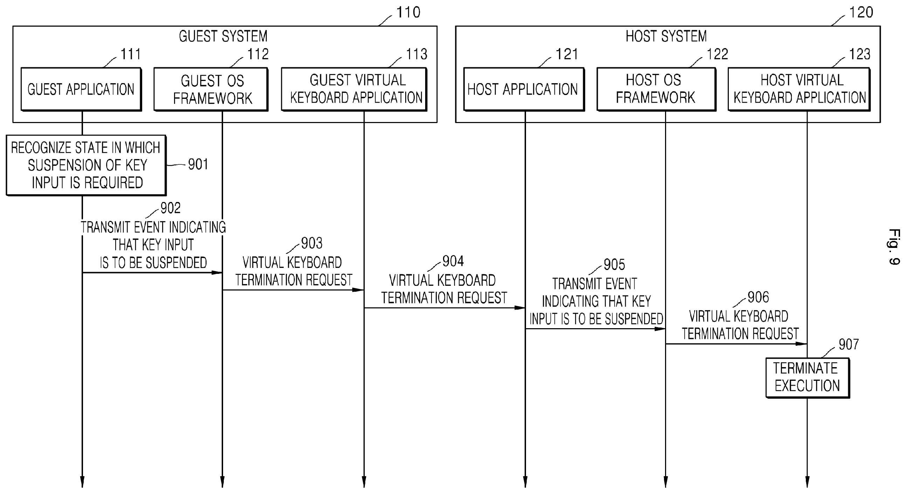

FIG. 9 illustrates a flowchart of an example of a method of terminating a virtual keyboard during execution of a guest application on a computing device, according to an embodiment.

Referring to FIG. 9, in operation 901, the guest application 111 may recognize a state in which key input is to be suspended. For example, in a case in which the guest application 111 is a search application as illustrated in FIG. 7, and a user input for selecting and executing one content item from among a plurality of content items displayed on the screen is received, no further key input is to be provided, and thus, this may be recognized as a state in which a search application is to be provided.

In operation 902, in response to recognizing a state in which key input is to be suspended, the guest application 111 may transmit, to the guest OS framework 112, information, such as an event, indicating that key input is to be suspended.

In operation 903, in response to receiving, from the guest application 111, the event indicating that key input is to be suspended, the guest OS framework 112 may transmit a virtual keyboard termination request to the guest virtual keyboard application 113.

In operation 904, in response to receiving the virtual keyboard termination request from the guest OS framework 112, the guest virtual keyboard application 113 may transmit a virtual keyboard termination request to the host application 121 of the host system 120.

In operation 905, in response to receiving the virtual keyboard termination request from the guest virtual keyboard application 113, the host application 121 may transmit, to the host OS framework 122, information, such as an event, indicating that key input is to be suspended. The host application 121 may recognize the receiving of the virtual keyboard termination request from the guest virtual keyboard application 113, as a state in which key input is to be suspended.

In operation 906, in response to receiving, from the host application 121, the event indicating that key input is to be suspended, the host OS framework 122 may transmit a virtual keyboard termination request to the host virtual keyboard application 123.

In operation 907, in response to receiving the virtual keyboard termination request from the host OS framework 122, the host virtual keyboard application 123 may terminate execution. Accordingly, the output of the host virtual keyboard user interface on the display screen is terminated.

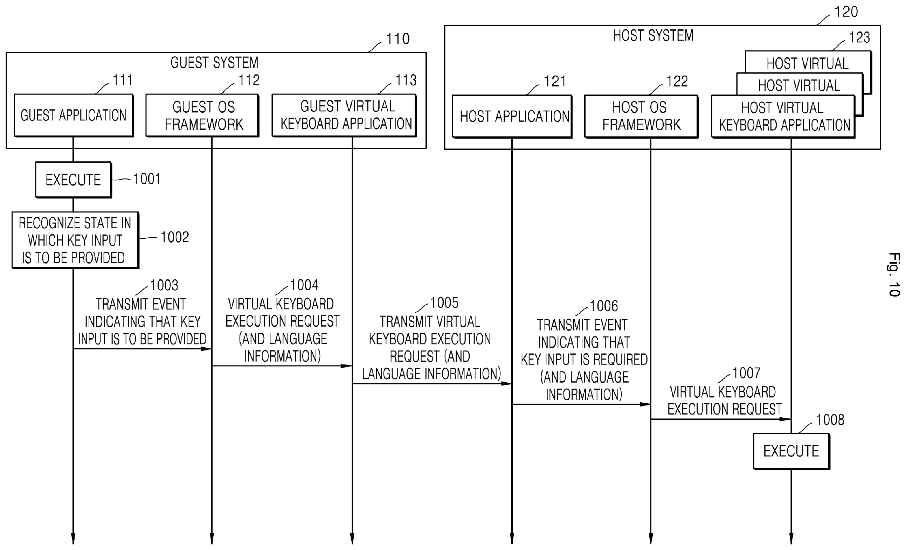

FIG. 10 illustrates a flowchart of an example of a method of operating a virtual keyboard during execution of a guest application on a computing device, according to an embodiment.

Operations 1001 to 1008 illustrated in FIG. 10 correspond to operations 601 to 608 illustrated in FIG. 6, except that, in the example illustrated in FIG. 10, language information is provided from the guest system to the host system.

Referring to FIG. 10, operations 1001 to 1003 correspond to operations 601 to 603 illustrated in FIG. 6, and thus, for additional implementation details, reference may be made to the descriptions of FIG. 6.

In operation 1004, in response to receiving, from the guest application 111, information, such as an event, indicating that a key input is to be provided, the guest OS framework 112 may transmit a virtual keyboard execution request to the guest virtual keyboard application 113. Here, the guest OS framework 112 may provide additional language information along with the virtual keyboard execution request. The language information may include information indicating the language of characters to be displayed on a virtual keyboard. For example, in a case in which computing device 100 is installed in the Republic of Korea, it is preferable that the language of the characters to be displayed on the virtual keyboard be Korean by default. For example, in a case in which computing device 100 is installed in China, it is preferable that the language of the characters to be displayed on the virtual keyboard be Chinese by default. There are a variety of ways to determine the language of characters to be displayed on a virtual keyboard. For example, as described above, the guest OS framework 112 may determine the language of a virtual keyboard based on the language of the country in which the computing device 100 is installed. For example, when the computing device 100 has registered therein information about a language based on a user input, the guest OS framework 112 may determine the language of the virtual keyboard based on the information registered based on the user input.

In operation 1005, in response to receiving the virtual keyboard execution request from the guest OS framework 112, the guest virtual keyboard application 113 may transmit a virtual keyboard execution request to the host application 121 of the host system 120. Here, the guest virtual keyboard application 113 may provide the language information received from the guest OS framework 112 along with the virtual keyboard execution request.

In operation 1006, in response to receiving the virtual keyboard execution request from the guest virtual keyboard application 113, the host application 121 may transmit, to the host OS framework 122, information, such as an event, indicating that a key input is to be provided. Here, the host application 121 may further transmit the language information received from the guest virtual keyboard application 113.

In operation 1007, in response to receiving, from the host application 121, the event indicating that a key input is to be provided, the host OS framework 122 may transmit a virtual keyboard execution request to the host virtual keyboard application 123. Here, the host OS framework 122 may further receive the language information from the host application 121. Accordingly, the host OS framework 122 may select a host virtual keyboard application corresponding to the language information received from the host application 121 from among host virtual keyboard applications corresponding to a plurality of languages, and transmit an execution request to the selected host virtual keyboard application. For example, in a case in which the host system 120 includes a host virtual keyboard application corresponding to Korean, a host virtual keyboard application corresponding to Japanese, and a host virtual keyboard application corresponding to Chinese, when the host OS framework 122 receives Chinese as language information, the host OS framework 122 may request execution of the host virtual keyboard application corresponding to Chinese.

In operation 1008, in response to receiving the virtual keyboard execution request from the host OS framework 122, the host virtual keyboard application 123 may be executed.

Although FIG. 10 illustrates an example in which the guest system provides the host system 120 with information about the language of the characters to be displayed on the virtual keyboard, the disclosure is not limited thereto. According to an embodiment, the host OS framework 122 of the host system 120 may determine the language of the characters to be displayed on the virtual keyboard.

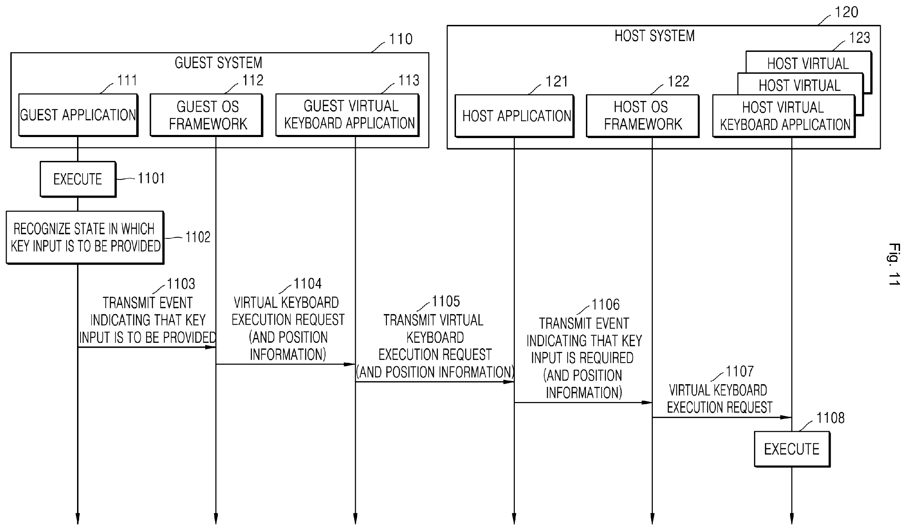

FIG. 11 illustrates a flowchart of an example of a method of operating a virtual keyboard during execution of a guest application on a computing device, according to an embodiment.

Operations 1101 to 1108 illustrated in FIG. 11 correspond to operations 601 to 608 illustrated in FIG. 6, except that, in the example illustrated in FIG. 11, position information is provided from the guest system to the host system.

Referring to FIG. 11, operations 1101 to 1103 correspond to operations 601 to 603 illustrated in FIG. 6, and thus, reference may be made to FIG. 6 for additional implementation details.

In operation 1104, in response to receiving, from the guest application 111, information, such as an event, indicating that a key input is to be provided, the guest OS framework 112 may transmit a virtual keyboard execution request to the guest virtual keyboard application 113. Here, the guest OS framework 112 may provide additional position information along with the virtual keyboard execution request. The position information may include information indicating the position of an area on a display screen where a virtual keyboard is to be displayed. For example, a screen layer of a virtual keyboard based on the host system may be displayed to be overlaid on a screen layer of a guest application running on the guest system. However, even in this case, it is not preferable for the screen layer of the virtual keyboard based on the host system to cover information displayed on an execution screen layer of the guest application, and thus, the guest OS framework 112 may take this into account and provide the host system with position information about an area where a virtual keyboard screen based on the host system is to be displayed.

In operation 1105, in response to receiving the virtual keyboard execution request from the guest OS framework 112, the guest virtual keyboard application 113 may transmit a virtual keyboard execution request to the host application 121 of the host system 120. Here, the guest virtual keyboard application 113 may provide the position information received from the guest OS framework 112 along with the virtual keyboard execution request.

In operation 1106, in response to receiving the virtual keyboard execution request from the guest virtual keyboard application 113, the host application 121 may transmit, to the host OS framework 122, information, such as an event, indicating that a key input is to be provided. Here, the host application 121 may further transmit the position information received from the guest virtual keyboard application 113.

In operation 1107, in response to receiving, from the host application 121, the event indicating that a key input is to be provided, the host OS framework 122 may transmit a virtual keyboard execution request to the host virtual keyboard application 123. Here, the host OS framework 122 may further receive the position information from the host application 121. Accordingly, when the host OS framework 122 displays a host virtual keyboard user interface upon execution of the host virtual keyboard application, the host OS framework 122 may control the host virtual keyboard user interface to be output at a corresponding position on the display screen with reference to the received position information.

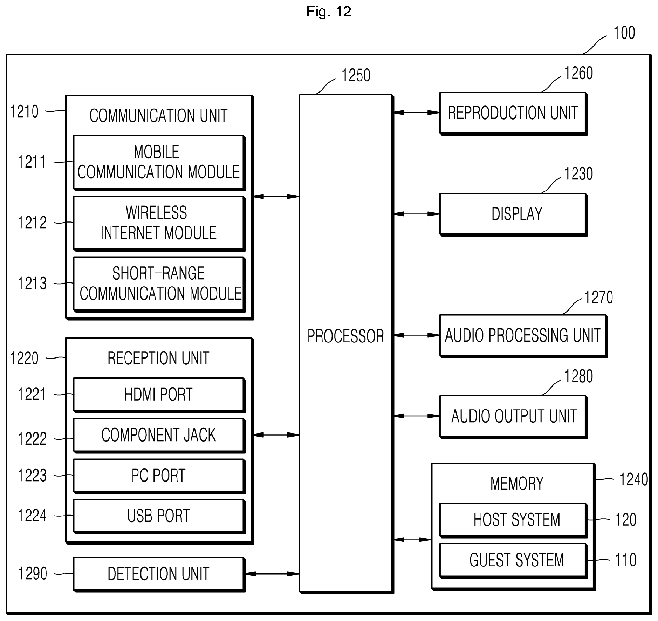

FIG. 12 illustrates an example of a computing device according to an embodiment.

Referring to FIG. 12, the computing device 100 may further include a reproduction unit 1260, an audio processing unit 1270, an audio output unit 1280, and a detection unit 1290, in addition to a communication unit 1210, a reception unit 1220, a display 1230, memory 1240, and a processor 1250.

The communication unit 1210 may include various communication circuits included in one or more modules that enable wireless communication between the computing device 100 and a wireless communication system or between the computing device 100 and a network in which other electronic devices are located. For example, the communication unit 1210 may include a mobile communication module 1211, a wireless Internet module 1212, and a short-range communication module 1213.

The mobile communication module 1211 transmits and receives radio signals with at least one of a base station, an external terminal, or a server on a mobile communication network. The radio signals may include a voice call signal, a video call signal, or various types of data according to text/multimedia message transmission and reception.

The wireless Internet module 1212 refers to a module for wireless Internet access, and may be embedded in or external to a device. Examples of wireless Internet technology may include wireless local area network (WLAN) (WiFi), wireless broadband (Wibro), worldwide interoperability for microwave access (Wimax), and high-speed downlink packet access (HSDPA). Through the wireless Internet module 1212, the device may establish a Wi-Fi peer-to-peer (P2P) connection with another device.

The short-range communication module 1213 refers to a module for short-range communication. Examples of short-range communication technology may include Bluetooth, Bluetooth Low Energy (BLE), radio-frequency identification (RFID), Infrared Data Association (IrDA), ultra-wideband (UWB), and ZigBee.

The reception unit 1220 may receive a video (e.g., a moving image), audio (e.g., a voice or music), and additional information (e.g., an electronic programming guide (EPG)) from outside the computing device 100 under control of the control unit 1250. The reception unit 1220 may include any one of a High-Definition Multimedia Interface (HDMI) port 1221, a component jack 1222, a PC port 1223, and a USB port 1224, or a combination thereof. In addition to the HDMI port, the reception unit 1220 may further include a DisplayPort (DP), a Thunderbolt port, and a Mobile High-Definition Link (MHL) port.

The reproduction unit 1260 may process an image signal received from the reception unit 1220 or the communication unit 1210, and output the processed image signal to the display 1230, under control of the control unit 1250.

The display 1230 may display the image signal received from the reproduction unit 1260 on a screen.

The audio processing unit 1270 may convert an audio signal received from the reception unit 1220 or the communication unit 1210 into an analog audio signal, and output the analog audio signal to the audio output unit 1280, under control of the control unit 1250.

The audio output unit 1280 may output the received analog audio signal through a speaker.

The detection unit 1290 may detect a voice of a user, an image of the user, or an interaction of the user, and may include a microphone, a camera unit, and an optical receiver. The microphone receives a voice uttered by the user. The microphone may convert the received voice into an electrical signal and output the electrical signal to the control unit 1250. The camera unit may receive images (e.g., consecutive frames) corresponding to the user's motion including a gesture, within a camera recognition range. The optical receiver receives an optical signal (including a control signal) from a remote control device. The optical receiver may receive an optical signal corresponding to a user input (e.g., a touch, a press, a touch gesture, a voice, or a motion) from the remote control device.

The memory 1240 may store a program related to an operation of the computing device 100, and various pieces of data generated during an operation of the computing device 100.

The processor 1250 may include various processing circuitries and/or a plurality of processors. For example, the term "processor" as used herein, including in the claims, may include various processing circuitries including at least one processor. One or more of the at least one processor may be configured to individually and/or collectively perform various functions described herein in a distributed manner. As used herein, "processor," "at least one processor," and "one or more processors" may be configured to perform various functions. However, these terms cover, for example but not limited to, situations where one processor performs some of the functions and other processor(s) perform the other functions, and situations where a single processor may perform all of the functions. In addition, the at least one processor may include a combination of processors configured to perform various functions disclosed herein in a distributed manner. The at least one processor may execute program instructions to achieve or perform various functions.

According to an embodiment, the processor 1250 may execute one or more instructions stored in the memory 1240 to execute a guest application that is based on the guest operating system.

According to an embodiment, the processor 1250 may be configured to execute the one or more instructions stored in the memory 1240 to, based on the guest application detecting that a key input is to be provided, cause the guest operating system to transmit a virtual keyboard execution request to the host operating system.

According to an embodiment, the processor 1250 may be further configured to execute the one or more instructions stored in the memory 1240 to, based on a host virtual keyboard application being executed by the host operating system, display a host virtual keyboard user interface on at least a portion of a display on which an execution screen of the guest application is displayed.

According to an embodiment, the processor 1250 may be further configured to execute the one or more instructions stored in the memory 1240 to, based on information, such as an event, indicating that a key input is to be provided being generated in the guest application, cause the guest virtual keyboard application to transmit a virtual keyboard execution request to the host application.

According to an embodiment, the processor 1250 may be further configured to execute the one or more instructions stored in the memory 1240 to cause the host application to perform an operation of executing the host virtual keyboard application based on receiving the virtual keyboard execution request.

According to an embodiment, the processor 1250 may be further configured to execute the one or more instructions stored in the memory 1240 to cause the host virtual keyboard application to display a host virtual keyboard user interface on at least a portion of the display on which the execution screen of the guest application is displayed, for executing a virtual keyboard based on the operation of the host application.

According to an embodiment, the processor 1250 may be further configured to execute the one or more instructions stored in the memory 1240 to cause a guest OS framework to receive, from the guest application, information, such as an event, indicating that a key input is to be provided, and based on receiving the event, transmit a virtual keyboard execution request to a guest virtual keyboard application.

According to an embodiment, the processor 1250 may be further configured to execute the one or more instructions stored in the memory 1240 to cause the guest virtual keyboard application to transmit the virtual keyboard execution request to the host application.

According to an embodiment, the processor 1250 may be further configured to execute the one or more instructions stored in the memory 1240 to cause the host application to, based on receiving the virtual keyboard execution request from the guest virtual keyboard application, transmit, to a host OS framework, information, such as an event, indicating that a key input is to be provided.

According to an embodiment, the processor 1250 may be further configured to execute the one or more instructions stored in the memory 1240 to cause the host OS framework to, based on receiving the event, transmit a virtual keyboard execution request to the host virtual keyboard application.

According to an embodiment, the processor 1250 may be further configured to execute the one or more instructions stored in the memory 1240 to cause the host virtual keyboard application to transmit a key value corresponding to a key input received based on the virtual keyboard user interface, to the guest application through the host application and a guest virtual keyboard application, and cause the guest application to perform an operation corresponding to the key value.

According to an embodiment, the processor 1250 may be further configured to execute the one or more instructions stored in the memory 1240 to, based on information, such as an event, indicating that key input is to be suspended being generated in the guest application, cause a guest virtual keyboard application to transmit a virtual keyboard termination request to the host application.

According to an embodiment, the processor 1250 may be further configured to execute the one or more instructions stored in the memory 1240 to cause the host application to perform an operation of terminating the execution of the host virtual keyboard application based on receiving the virtual keyboard termination request.

According to an embodiment, the processor 1250 may be further configured to execute the one or more instructions stored in the memory 1240 to, based on the operation of the host application, cause the host virtual keyboard application to stop outputting the host virtual keyboard user interface on the display on which the execution screen of the guest application is displayed.

According to an embodiment, the processor 1250 may be further configured to execute the one or more instructions stored in the memory 1240 to cause a guest OS framework to receive, from the guest application, information, such as an event, indicating that key input is to be suspended, and based on receiving the event, transmit a virtual keyboard termination request to the guest virtual keyboard application.

According to an embodiment, the processor 1250 may be further configured to execute the one or more instructions stored in the memory 1240 to cause the guest virtual keyboard application to transmit the virtual keyboard termination request to the host application.

According to an embodiment, the processor 1250 may be further configured to execute the one or more instructions stored in the memory 1240 to cause the host application to, based on receiving the virtual keyboard termination request from the guest virtual keyboard application, transmit, to a host OS framework, information, such as an event, indicating that key input is to be suspended.

According to an embodiment, the processor 1250 may be further configured to execute the one or more instructions stored in the memory 1240 to cause the host OS framework to, based on receiving the event, transmit a virtual keyboard termination request to the host virtual keyboard application.

According to an embodiment, the processor 1250 may be further configured to execute the one or more instructions stored in the memory 1240 to cause a guest virtual keyboard application to receive information about a language from a guest OS framework and transmit the information about the language to the host application.

According to an embodiment, the processor 1250 may be further configured to execute the one or more instructions stored in the memory 1240 to cause the host application to transmit the information about the language to a host OS framework.

According to an embodiment, the processor 1250 may be further configured to execute the one or more instructions stored in the memory 1240 to cause the host OS framework to transmit a virtual keyboard execution request to a host virtual keyboard application corresponding to the language by referring to the received information about the language.

According to an embodiment, the processor 1250 may be further configured to execute the one or more instructions stored in the memory 1240 to cause a host OS framework to determine information about a language and transmit the information about the language to the host virtual keyboard application corresponding to the language.

According to an embodiment, the processor 1250 may be further configured to execute the one or more instructions stored in the memory 1240 to cause a guest virtual keyboard application to receive, from a guest OS framework, information about a display position of a virtual keyboard, and transmit the information about the display position to the host application.

According to an embodiment, the processor 1250 may be further configured to execute the one or more instructions stored in the memory 1240 to cause the host application to transmit the information about the display position to a host OS framework.

According to an embodiment, the processor 1250 may be further configured to execute the one or more instructions stored in the memory 1240 to cause the host OS framework to display the host virtual keyboard user interface at the display position by referring to the received information about the display position.

According to an embodiment, a method of operating a computing device including a guest operating system and a host operating system may include executing a guest application that is based on the guest operating system.

According to an embodiment, the method may include, based on the guest application detecting that a key input is to be provided, causing the guest operating system to transmit a virtual keyboard execution request to the host operating system.

According to an embodiment, the method may include, based on a host virtual keyboard application being executed by the host operating system, displaying a host virtual keyboard user interface on at least a portion of a display on which an execution screen of the guest application is displayed.

According to an embodiment, the method may include, based on information, such as an event, indicating that a key input is to be provided being generated in the guest application, causing a guest virtual keyboard application to transmit a virtual keyboard execution request to the host application.

According to an embodiment, the method may include causing the host application to perform an operation of executing the host virtual keyboard application based on receiving the virtual keyboard execution request.

According to an embodiment, the method may include causing the host virtual keyboard application to display a host virtual keyboard user interface on at least a portion of the display on which the execution screen of the guest application is displayed, for executing a virtual keyboard based on the operation of the host application.

According to an embodiment, the method may include causing a guest OS framework to receive, from the guest application, information, such as an event, indicating that a key input is to be provided, and based on receiving the event, transmit a virtual keyboard execution request to a guest virtual keyboard application.

According to an embodiment, the method may include causing the guest virtual keyboard application to transmit the virtual keyboard execution request to the host application.

According to an embodiment, the method may include causing the host application to, based on receiving the virtual keyboard execution request from a guest virtual keyboard application, transmit, to a host OS framework, information, such as an event, indicating that a key input is to be provided.

According to an embodiment, the method may include causing the host OS framework to, based on receiving the event, transmit a virtual keyboard execution request to the host virtual keyboard application.

According to an embodiment, the method may include causing the host virtual keyboard application to transmit a key value corresponding to a key input received based on the virtual keyboard user interface, to the guest application through the host application and a guest virtual keyboard application.

According to an embodiment, the method may include causing the guest application to perform an operation corresponding to the key value.

According to an embodiment, the method may include, based on information, such as an event, indicating that key input is to be suspended being generated in the guest application, causing a guest virtual keyboard application to transmit a virtual keyboard termination request to the host application.

According to an embodiment, the method may include causing the host application to perform an operation of terminating the execution of the host virtual keyboard application based on receiving the virtual keyboard termination request.

According to an embodiment, the method may include, based on the operation of the host application, causing the host virtual keyboard application to stop outputting the host virtual keyboard user interface on the display on which the execution screen of the guest application is displayed.

According to an embodiment, the method may include causing a guest OS framework to receive, from the guest application, information, such as an event, indicating that key input is to be suspended, and based on receiving the event, transmit a virtual keyboard termination request to a guest virtual keyboard application.

According to an embodiment, the method may include causing the guest virtual keyboard application to transmit the virtual keyboard termination request to the host application.

According to an embodiment, the method may include causing the host application to, based on receiving the virtual keyboard termination request from the guest virtual keyboard application, transmit, to a host OS framework, information, such as an event, indicating that key input is to be suspended.

According to an embodiment, the method may include causing the host OS framework to, based on receiving the event, transmit a virtual keyboard termination request to the host virtual keyboard application.

According to an embodiment, the method may include causing a guest virtual keyboard application to receive information about a language from a guest OS framework and transmit the information about the language to the host application.

According to an embodiment, the method may include causing the host application to transmit the information about the language to a host OS framework.

According to an embodiment, the method may include causing the host OS framework to transmit a virtual keyboard execution request to a host virtual keyboard application corresponding to the language by referring to the received information about the language.

According to an embodiment, the method may include causing the host OS framework to determine information about a language and transmit the information about the language to the host virtual keyboard application corresponding to the language.

According to an embodiment, the method may include causing a guest virtual keyboard application to receive, from a guest OS framework, information about a display position of a virtual keyboard, and transmit the information about the display position to the host application.

According to an embodiment, the method may include causing the host application to transmit the information about the display position to a host OS framework.

According to an embodiment, the method may include causing the host OS framework to display the host virtual keyboard user interface at the display position by referring to the received information about the display position.

Some embodiments may be implemented in the form of a recording medium including instructions executable by a computer such as a program module executed by a computer. The computer-readable medium may be any available medium which is accessible by a computer, and may include a volatile or non-volatile medium and a removable or non-removable medium. The computer-readable medium may also include a computer storage medium. The computer storage media include both volatile and non-volatile, removable and non-removable media implemented in any method or technique for storing information such as computer-readable instructions, data structures, program modules or other data.

Embodiments disclosed herein may be implemented by a software (S/W) program including instructions stored in a computer-readable storage medium.

The computer is a device capable of invoking instructions stored in a storage medium and performing operations according to embodiments disclosed herein, and may include an electronic device according to embodiments disclosed herein.

The computer-readable storage medium may be provided in the form of a non-transitory storage medium. Here, the term 'non-transitory' means that the storage medium is a tangible device, and does not include a signal, but this term does not differentiate between where data is semi-permanently stored in the storage medium and where the data is temporarily stored in the storage medium.

In addition, a control method according to embodiments disclosed herein may be provided in a computer program product. The computer program product may be traded as commodities between sellers and buyers.

The computer program product may include a S/W program and a computer-readable recording medium storing the S/W program. For example, the computer program product may include a product in the form of a S/W program electronically distributed (e.g., a downloadable application) through a manufacturer of a device or an electronic market (e.g., Google Play Store, App Store). For electronic distribution, at least part of the S/W program may be stored in a storage medium or temporarily generated. In this case, the storage medium may be a storage medium of a server of the manufacturer or a server of the electronic market, or a relay server that temporarily stores the S/W program.

The computer program product may include a storage medium of a server or a storage medium of a device, in a system consisting of the server and the device. When there is a third device (e.g., a smart phone) communicatively connected to the server or the device, the computer program product may include a storage medium of the third device. The computer program product may include an S/W program itself that is transmitted from the server to the device or the third device, or transmitted from the third device to the device.

In this case, any one of the server, the device, and the third device may execute the computer program product and perform the method according to embodiments disclosed herein. Two or more of the server, the device, and the third device may execute the computer program product and perform the method according to embodiments disclosed herein in a distributed manner.

For example, the server (e.g., a cloud server or an artificial intelligence server) may execute the computer program product stored in the server, and may control the device communicatively connected to the server to perform the method according to embodiments disclosed herein.

As another example, the third device may execute the computer program product to control a device communicatively connected to the third device to perform the method according to an embodiment disclosed herein. When the third device executes the computer program product, the third device may download the computer program product from the server, and execute the downloaded computer program product. The third device may execute the computer program product provided in a preloaded state, and perform the method according to embodiments disclosed herein.

In addition, as used herein, terms such as "...er (or)", "... unit", "... module", etc., denote a unit that performs at least one function or operation, which may be implemented as hardware or software or a combination thereof.

While the disclosure have been shown and described, it will be understood by one of ordinary skill in the art that various changes in form and details may be made therein without departing from the spirit and scope of the disclosure. Therefore, it should be understood that the above-described embodiments are exemplary in all respects and do not limit the scope of the disclosure. For example, each element described in a single type may be executed in a distributed manner, and elements described distributed may also be executed in an integrated form.

The scope of the disclosure is not defined by the detailed description but by the following claims, and all modifications or alternatives derived from the scope and spirit of the claims and equivalents thereof fall within the scope of the disclosure.

## Claims

1. A computing device comprising:
one or more processors; and
memory storing instructions that, when executed by the one or more processors, cause the computing device to:
based on detecting, via the guest application, that a key input is to be provided, transmit, via the guest operating system, a first virtual keyboard execution request to a host operating system;
execute, via the host operating system, a first host virtual keyboard application; and
based on the first host virtual keyboard application being executed, display, via the first host virtual keyboard application, a host virtual keyboard user interface, for a virtual keyboard of the host operating system, on at least a first portion of a display on which an execution screen of the guest application is displayed.

2. The computing device of claim 1, wherein the instructions, when executed by the one or more processors, cause the computing device to:
generate, via the guest application, first information indicating the key input is to be provided;
based on the first information being generated, transmit, via a guest virtual keyboard application, the first virtual keyboard execution request to a host application of the host operating system;
execute, via the host application, the first host virtual keyboard application based on receiving the first virtual keyboard execution request; and
display, via the first host virtual keyboard application, the host virtual keyboard user interface, on the at least first portion of the display.

3. The computing device of claim 1 or claim 2, wherein the instructions, when executed by the one or more processors, cause the computing device to:
receive, via a guest operating system framework, from the guest application, first information indicating the key input is to be provided; and
based on the first information being received by the guest operating system framework:
transmit, via the guest operating system framework, the first virtual keyboard execution request to a guest virtual keyboard application; and
transmit, via the guest virtual keyboard application, the first virtual keyboard execution request to a host application of the host operating system.

4. The computing device of any one of claim 1 to claim 3, wherein the instructions, when executed by the one or more processors, cause the computing device to:
based on receiving, via the host application, the first virtual keyboard execution request from the guest virtual keyboard application, transmit, to a host OS framework, second information indicating the key input is to be provided; and
based on the host OS framework receiving the second information, transmit, via the host OS framework, via the host application, a second virtual keyboard execution request to the first host virtual keyboard application.

5. The computing device of any one of claim 1 to claim 4, wherein the instructions, when executed by the one or more processors, further cause the computing device to:
transmit, via the first host virtual keyboard application, a key value corresponding to a key that is input to the host virtual keyboard user interface, to the guest application through a host application of the host operating system and a guest virtual keyboard application; and
perform, via the guest application, an operation corresponding to the key value.

6. The computing device of any one of claim 1 to claim 5, wherein the instructions, when executed by the one or more processors, further cause the computing device to:
generate, via the guest application, first information indicating the key input is to be suspended;
based on the first information being generated, transmit, via a guest virtual keyboard application, a first virtual keyboard termination request to a host application of the host operating system;
terminate, via the host application, the first host virtual keyboard application, based on the host application receiving the first virtual keyboard termination request; and
stop, via the host application, displaying the host virtual keyboard user interface on the display.

7. The computing device of any one of claim 1 to claim 6, wherein the instructions, when executed by the one or more processors, cause the computing device to:
receive, via a guest OS framework, from the guest application, the first information, and based on the guest OS framework receiving the first information, transmit, via the guest OS framework, the first virtual keyboard termination request to the guest virtual keyboard application;
transmit, via the guest virtual keyboard application, the first virtual keyboard termination request to the host application;
based on the host application receiving the first virtual keyboard termination request, transmit, via the host application, to a host OS framework, second information indicating the key input is to be suspended; and
based on the host OS framework receiving the second information, transmit, via the host OS framework, a second virtual keyboard termination request to the first host virtual keyboard application.

8. The computing device of any one of claim 1 to claim 7, wherein the instructions, when executed by the one or more processors, cause the computing device to:
receive, via a guest virtual keyboard application, language information, from a guest OS framework, and transmit, via the guest virtual keyboard application, the language information to a host application of the host operating system;
transmit, via the host application, the language information to a host OS framework; and
transmit, via the host OS framework, a virtual keyboard execution request, to a second host virtual keyboard application corresponding to the language information.

9. The computing device of any one of claim 1 to claim 8, wherein the instructions, when executed by the one or more processors, cause the computing device to:
receive, via a guest virtual keyboard application, from a guest OS framework, position information for the host virtual keyboard user interface, and transmit, via the guest virtual keyboard application, the position information to a host application of the host operating system;
transmit, via the host application, the position information to a host OS framework; and
display, via the host OS framework, the host virtual keyboard user interface at a position corresponding to the position information.

10. A method of operating a computing device comprising:
executing a guest application of a guest operating system (OS);
based on detecting, via the guest application, that a key input is to be provided, transmitting, via the guest operating system, a first virtual keyboard execution request to a host operating system;
executing, via the host operating system, a first host virtual keyboard application; and
based on the first host virtual keyboard application being executed, displaying, via the first host virtual keyboard application, a host virtual keyboard user interface, for a virtual keyboard of the host operating system, on at least a first portion of a display on which an execution screen of the guest application is displayed.

11. The method of claim 10, further comprising:
generating, via the guest application, first information indicating the key input is to be provided,
based on the first information being generated, transmitting, via a guest virtual keyboard application, the first virtual keyboard execution request to a host application of the host operating system,
executing, via the host application, the first host virtual keyboard application based on receiving the first virtual keyboard execution request, and
displaying, via the first host virtual keyboard application, the host virtual keyboard user interface, on the at least first portion of the display

12. The method of claim 10 or claim 11, further comprising:
receiving, via a guest operating system framework, from the guest application, first information indicating the key input is to be provided, and
based on the first information being received by the guest operating system framework:
transmitting, via the guest operating system framework, the first virtual keyboard execution request to a guest virtual keyboard application; and
transmitting, via the guest virtual keyboard application, the first virtual keyboard execution request to a host application of the host operating system.

13. The method of any one of claim 10 to claim 12, further comprising:
based on receiving, via the host application, the first virtual keyboard execution request from the guest virtual keyboard application, transmitting, to a host OS framework, via the host application, second information indicating the key input is to be provided; and
based on the host OS framework receiving the second information, transmitting, via the host application, a second virtual keyboard execution request to the first host virtual keyboard application.

14. The method of any one of claim 10 to claim 13, further comprising:
transmitting, via the first host virtual keyboard application, a key value corresponding to a key that is input to the host virtual keyboard user interface, to the guest application through a host application of the host operating system and a guest virtual keyboard application; and
performing, via the guest application, an operation corresponding to the key value.

15. A non-transitory computer-readable recording medium having instructions recorded thereon, that, when executed by one or more processors, cause the one or more processors to:
based on detecting, via the guest application, that a key input is to be provided, transmit, via the guest operating system, a first virtual keyboard execution request to a host operating system;
execute, via the host operating system, a first host virtual keyboard application; and
based on the first host virtual keyboard application being executed, display, via the first host virtual keyboard application, a host virtual keyboard user interface, for a virtual keyboard of the host operating system, on at least a first portion of a display on which an execution screen of the guest application is displayed.
